# EUROPEAN PATENT APPLICATION

(11) **EP 4 614 346 A1**
(43) Date of publication of application: **10.09.2025**
(21) Application number: 25161921.9
(22) Date of filing: 05.03.2025
(51) Int. Cl.: G06F 16/25

(54) **ENHANCED NO-CODE ETL SYSTEM FOR AUTOMATED BIG DATA TRANSFORMATION AND SHARING**

(30) Priority: 08.03.2024 US 202418599752
(71) Applicant: CloudBlue LLC, Irvine, CA 92612 (US)
(72) Inventor: MAKSIMOV, Leonid, 08009 Barcelona (ES); GREBENSHCHIKOV, Vladimir, 08025 Barcelona (ES); FARAONE, Francesco, 08023 Barcelona (ES); KOLYUBYAKIN, Maxim, 08026 Barcelona (ES); TROITSKAIA, Aleksandra, 08911 Barcelona (ES)
(74) Representative: Zoebisch, Michael

(57) **Abstract**

Data processing systems and methods provide for automated Extract, Transform, Load (ETL) operations. A server, coupled with a processor, executes instructions to extract data from various sources such as cloud storage, external APIs, and direct uploads. The system can include a stream mode processing unit for handling large data files in manageable chunks, thereby enhancing efficiency and reducing memory load. It performs integrity checks to ensure data accuracy and consistency. The system configures and applies both predefined and custom transformations, facilitated through a user-friendly interface and API integration. Custom transformation logic is integrated into the process, allowing for adaptable data manipulation. The transformed data is then validated and formatted for loading into diverse destination systems. This ETL process is efficient, scalable, and user-friendly, making it suitable for a wide range of data processing applications.

## Description

### BACKGROUND

The landscape of data management, specifically in extracting, transforming, and loading (ETL) big data, faces significant challenges in efficiency and scalability. Traditional ETL sysstems, such as AMAZON WEB SERVICES (AWS), AIRFLOW APACHE, and APPACHE BEAM, predominantly rely on code-based operations. This approach necessitates a substantial number of programmers to manage data processes, making it impractical for scenarios like reconciliation of thousands of subscriptions, which require simplicity and automation for managerial oversight.

Existing systems struggle with the timely and efficient processing of large data sets. The process of data reconciliation, billing, and pricing, often involving excessively large Excel files and other formats, requires extensive manual intervention, leading to a prolonged duration of operations, sometimes spanning several weeks. This inefficiency is exacerbated when dealing with big tabular data, as these systems face limitations in handling files beyond a certain size without compromising performance.

Moreover, the lack of automation in traditional ETL processes necessitates a high degree of manual input, leading to scalability issues. As companies grow and the number of contractors increases globally, the need for a more robust, scalable system becomes evident. The current systems also suffer from weak auditability due to the involvement of multiple systems and operators, and the reliance on email communication which lacks transparency and traceability.

These shortcomings highlight the need for an innovative solution that can handle large-scale data processing efficiently, ensure scalability, and reduce reliance on manual operations, thereby enhancing overall operational efficiency and transparency in big data management.

### BRIEF SUMMARY OF THE INVENTION

Embodiments described herein improve big data management by providing a versatile, efficient, and user-friendly ETL system. Systems and methods are provided to address complexities of manual operation, scalability, and auditability in traditional ETL processes, facilitating a comprehensive solution for modern big data needs. Specifically, the disclosed embodiments provide a novel no-code ETL (Extract, Transform, Load) system configured to automate and simplify the process of big data management, specifically targeting the reconciliation, billing, and pricing operations in business environments. Systems and methods are uniquely configured to enable managers, beyond traditional programmers, to automate data processing and sharing with minimal human intervention.

In some embodiments, systems and methods are provided to process large data streams including, for example, big tabular data, without size limitations typical in conventional systems. In some embodiments, systems and methods are scalable to handle files significantly larger than traditional limits (e.g., over 1GB), making the disclosed embodiments particularly suitable for processing extensive subscription data in mediums appropriate for data exchange (such as MICROSOFT EXCEL, or the like).

In some embodiments, systems and methods can be adaptable to various data formats and can integrate with external CRM systems via APIs, using adapters to customize the data presentation. Such flexibility can extend to the system's output capabilities, which are not restricted to Excel but include other formats like CSV and JSON.

In some embodiments, no-code operation is enabled, where the system is configured with a simplified user interface, facilitating uploading data, configuring transformations, and sharing results without needing programming skills.

In some embodiments, comprehensive data processing supports a wide range of transformations, such as copying, renaming columns, mathematical operations, currency conversion using real-time rates, and data filling from various sources. Data processing can be enabled through a built-in programming language and the ability to extend functionality via low-code modifications.

In some embodiments, automated data verification and auditing can be performed, for example, before transformation begins to verify each data component for consistency and to log transformation steps, enhancing transparency and accountability.

In some embodiments, the system can be scaled and adapted for different partners, marketplaces, and/or products. The modular design of the system permits cloning of data streams for use with other partners, enhancing operational flexibility. In some embodiments, a test environment can be provided such that users can test configurations on sample data before applying them to production data, ensuring reliability and accuracy in data processing. A notification system incorporates email and/or internal notifications to alert users if a transformation requires human intervention, streamlining the process flow. In some embodiments, the system ensures data privacy by restricting visibility within accounts and providing options for publishing results to specific partners under defined agreements.

### BRIEF DESCRIPTION OF THE DRAWINGS/FIGURES

FIG. 1 depicts a system for automated no-code ETL, according to some embodiments.
FIG. 2 illustrates an example operating environment of an automated no-code ETL system, according to some embodiments.
FIG. 3 depicts a data extraction component of a system for automated no-code ETL, according to some embodiments.
FIG. 4 depicts a data transformation component of a system for automated no-code ETL, according to some embodiments.
FIG. 5 depicts an automated process for no-code ETL, according to some embodiments.
FIG. 6 depicts a data extraction process of a system for automated no-code ETL, according to some embodiments.
FIG. 7 depicts a data transformation process of a system for automated no-code ETL, according to some embodiments.
FIG. 8 depicts an exemplary computer system, according to some embodiments.
FIG. 9 depicts a user interface (UI) for automated no-code ETL, according to some embodiments.
FIG. 10 depicts a user interface (UI) for automated no-code ETL, according to some embodiments.

### DETAILED DESCRIPTION OF THE INVENTION

Embodiments may be implemented in hardware, firmware, software, or any combination thereof. Embodiments may also be implemented as instructions stored on a machine-readable medium, which may be read and executed by one or more processors. A machine-readable medium may include any mechanism for storing or transmitting information in a form readable by a machine (e.g., a computing device). For example, a machine-readable medium may include read only memory (ROM); random access memory (RAM); magnetic disk storage media; optical storage media; flash memory devices, and others. Further, firmware, software, routines, instructions may be described herein as performing certain actions. However, it should be appreciated that such descriptions are merely for convenience and that such actions in fact result from computing devices, processors, controllers, or other devices executing the firmware, software, routines, instructions, etc.

It should be understood that the operations shown in the exemplary methods are not exhaustive and that other operations can be performed as well before, after, or between any of the illustrated operations. In some embodiments of the present disclosure, the operations can be performed in a different order and/or vary.

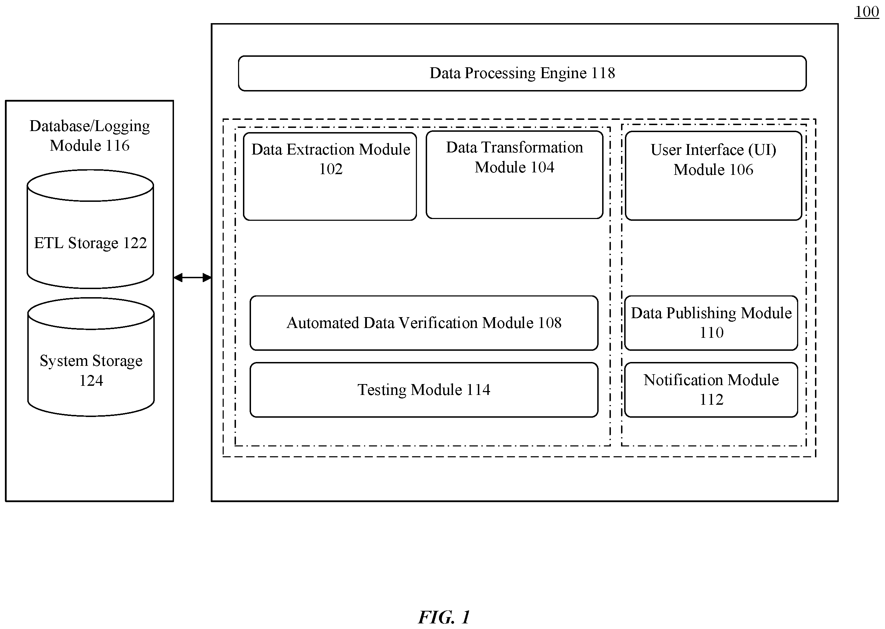

FIG. 1 illustrates system 100 for the automation of big data reconciliation, billing, and pricing processes. The system, referred to as a no-code ETL (Extract, Transform, Load) system 100, is configured to facilitate the automated processing and publishing of data streams, particularly in tabular formats such as Excel files. Referring to FIG. 1, a no-code ETL system 100 is provided to automate and simplify complex data operations. In one non-limiting example, a no-code ETL system 100 for processing big data can include a Data Extraction Module 102 and a Data Transformation Module 104.

In some embodiments, Data Extraction Module 102 can include functionalities to interface with various data sources, including cloud-based platforms and external APIs. For instance, Data Extraction Module 102 can be configured to pull data from side clients' CRM systems, providing flexibility in sourcing initial data. The module is capable of handling various file types, with a current focus on Excel files, and is configured to read files in a stream mode, which mitigates technical limitations on file size.

In some embodiments, stream mode processing enables handling large data sets, especially when dealing with big tabular data, our enhanced no-code ETL system. A person of ordinary skill in the art would understand a stream mode processing technique enables the efficient reading and processing of data in manageable chunks, significantly reducing memory overhead and facilitating real-time data processing. By leveraging stream mode, the system can dynamically adjust to varying data sizes and complexities, ensuring optimal performance without compromising on processing speed or accuracy. Stream mode processing facilitates operations requiring continuous data flow, such as real-time data transformation and loading, and provides a scalable solution for a no-code ETL methodology.

In one non-limiting example, Data Extraction Module 102 can use a .NET framework and implement a FileStream.Read method to perform stream mode data extraction from large files. The FileStream.Read method enables the module to read data in segments, allowing for the processing of large datasets without the need to load the entire file into memory. By employing this stream-based approach, the system can maximize performance requiring minimal memory consumption, facilitating a more scalable and responsive data extraction process.

In some embodiments, Data Transformation Module 104 can include a set of tools and functionalities for processing the extracted data. This module enables users to configure a series of transformations and operations on the data, which can include mathematical operations, currency conversions using real-time rates, and data filling from various sources. The module supports a wide range of out-of-box transformations such as manufacturer suggested retail price (MSRP) and cost of goods sold (COGS) calculations, markup and margin computations, and value added tax (VAT) rate applications. Additionally, Data Transformation Module 104 can support custom transformations via one or more application programming interfaces (APIs) (e.g., via a CLOUDBLUE CONNECT Transformation Extension module API), allowing further customization and flexibility.

To enhance the system's capability for data extraction, in some embodiments Data Extraction Module 102 can be configured to interact with Data Transformation Module 104 by providing transition of data automatically queued (following extraction and validation for structure and content, for example) for transformation. The interaction of Data Extraction Module 102 with Data Transformation Module 104 can be configured to ensure that extracted data aligns with the transformation criteria set and interpreted by Data Transformation Module 104, which can then apply necessary manipulations without requiring manual intervention.

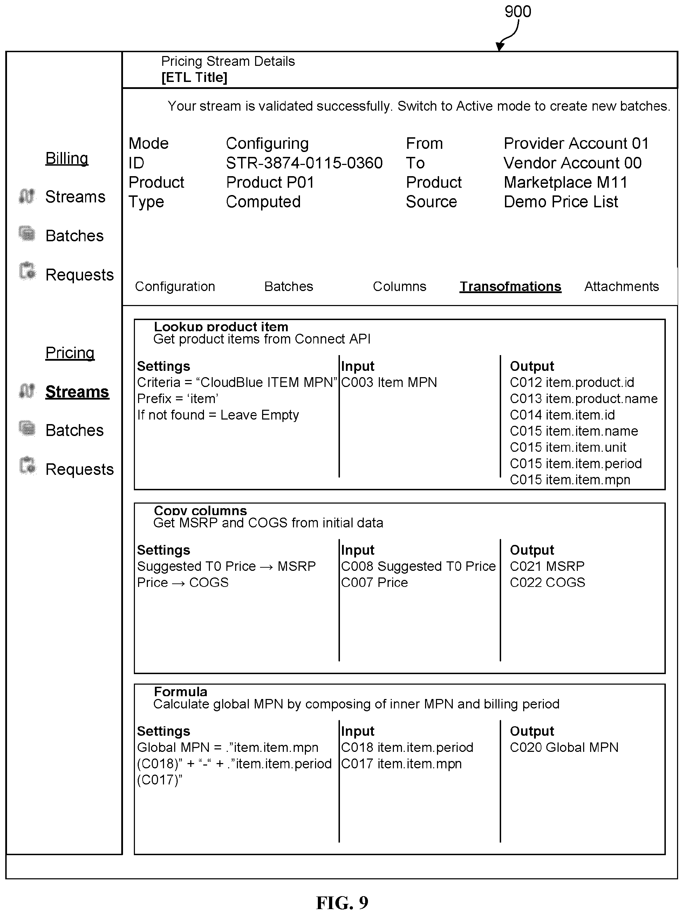

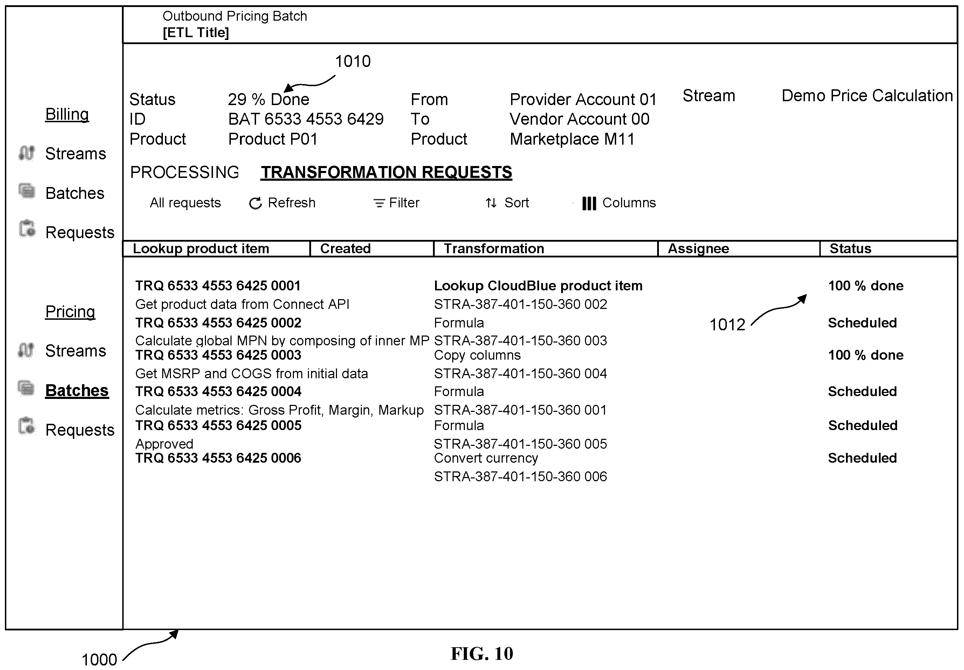

In some embodiments, no-code ETL system 100 can include a UI Module 106 configured for ease of use, allowing users to upload data files, configure transformations, and monitor the entire data processing workflow. The UI Module 106 can also be configured to facilitate the sharing of processed data with partners in either automatic or semi-automatic modes. An exemplary UI is shown in FIGS. 9 and 10.

As shown in FIG. 9, UI 900 for an enhanced no-code ETL system designed for big data transformation and sharing, which can be implemented to permit a wide range of transformation logic to be implemented for example by Data Transformation Module 104, without requiring coding expertise. In a non-limiting example, a user can perform a pricing stream customization as shown, implementing granular rules in the UI configured for ease of use, such as rules for product lookup, retrieving suggested pricing (MSRP) and cost of goods sold (COGS) values, etc. FIG. 10 illustrates UI 1000 for an enhanced no-code ETL system designed for big data transformation and sharing. As shown, UI 1000 includes a section for outbound pricing batch management, including status indicators 1010 and 1012. Status indicator 1010 shows the overall progress of batch processing, represented as a percentage to indicate how much of the batch has been completed. Another status indicator, 1012, displays the finalization or scheduled status of individual transformations, using a similar percentage completion metric. These indicators form a comprehensive dashboard that allows users to monitor and manage data transformation tasks efficiently, including viewing batch details, processing transformation requests, and tracking overall progress. UI 900 and UI 1000 are each designed to streamline operations for users without coding expertise, enabling them to configure, execute, and monitor ETL processes through a simplified and intuitive interface.

Data Transformation Module 104, upon receiving data from the Data Extraction Module 102, can be configured to initiate one or more pre-configured or custom transformations. Data Transformation Module 104 can be configured to communicate with UI Module 106 to receive user-defined transformation rules and apply them accordingly. In some embodiments, a bidirectional flow of information between Data Transformation Module 104 and UI Module 106 enables users to set transformation parameters and receive feedback on the transformation results.

In some embodiments, system 100 can further include an Automated Data Verification and Auditing Module 108. This module is responsible for validating the data structure row by row against a predefined sample file structure. It also provides functionality to check cell values based on user-defined constraints, such as the allowance of empty cells or the precision of decimals.

In some embodiments, system 100 can include Data Publishing Module 110. It enables the dissemination of processed data to various stakeholders, such as vendors, distributors, and resellers. This module is particularly adept at handling complex calculation chains, where data needs to pass through multiple stages of processing and approval before being shared.

UI Module 106 can provide a central hub for user interaction with the system. It can collect input for the Data Transformation Module 104, for example, and display processed data from the Data Publishing Module 110. Thereby, UI Module 106 can consolidate transformation rules applied by Data Transformation Module 104 and the output ready for publishing, providing an informative overview of the data lifecycle within system 100.

In some embodiments, Data Publishing Module 110 can receive processed and transformed data from Data Transformation Module 104 and format this data into publishable content for distribution to intended users/entities. In terms of scalability and flexibility, the no-code ETL system 100 can enable account administrators to clone data streams for use with different partners or marketplaces. This feature ensures that the system can adapt and scale according to the growing and varying needs of businesses.

Additionally, the system incorporates a Notification Module 112, which alerts users via email and an internal notification system when human intervention is required in a transformation process. This module helps in streamlining operations and ensuring timely human input when necessary. Data Publishing Module 110 can operably interact with Notification Module 112 to inform users of the publishing status and any required actions, ensuring that all users and entities have access to current data.

The system's architecture allows for the connection of data streams to partner accounts, marketplaces, and individual products or plans. This capability ensures that the processed data is relevant and can be utilized effectively for the intended purpose, be it for pricing, billing, or reconciliation.

In some embodiments, system 100 can include Testing Module 114, which enables administrators to test the configuration on sample data before deploying transformations to production data. This module is provided to ensure that the data processing workflow remains reliable and accurate. In some embodiments, Testing Module 114 can be configured to provides a controlled environment to test data transformations applied by Data Transformation Module 104.

In some embodiments, Notification Module 112 can coordinate between Testing Module 114 and UI Module 106. Notification Module 112 can alert system administrators of any transformation errors detected during testing, prompting necessary adjustments through UI Module 106 to ensure data integrity before publishing.

In some embodiments, system 100 can include Internal Database and Logging Module 116, which keeps a comprehensive log of all transformation changes, including the time of action, the user involved, any relevant comments, etc. This module enhances the system's transparency and traceability, allowing users to audit the transformation processes effectively. Testing Module 114 can be configured to integrate with Internal Database and Logging Module 116 to log all test results for auditing and compliance purposes. A feedback loop between modules can ensure that only verified and accurate transformations are deployed to production.

In some embodiments, Data Processing Engine 118, a part of the cloud platform EaaS module, handles the actual data processing tasks. It uses a multi-threaded approach to break down the source data into parts that can be processed in parallel, ensuring efficiency and speed in handling large datasets. Data Processing Engine 118, which executes the data processing tasks can integrate with Data Extraction Module 102 and Data Transformation Module 104 to ensure that computational resources are allocated efficiently and that the data flow between extraction and transformation stages is optimized for performance. Thereby, no-code ETL system 100 is configured to enable the automated processing, transformation, and sharing of big data for reconciliation, billing, and pricing processes in a business environment.

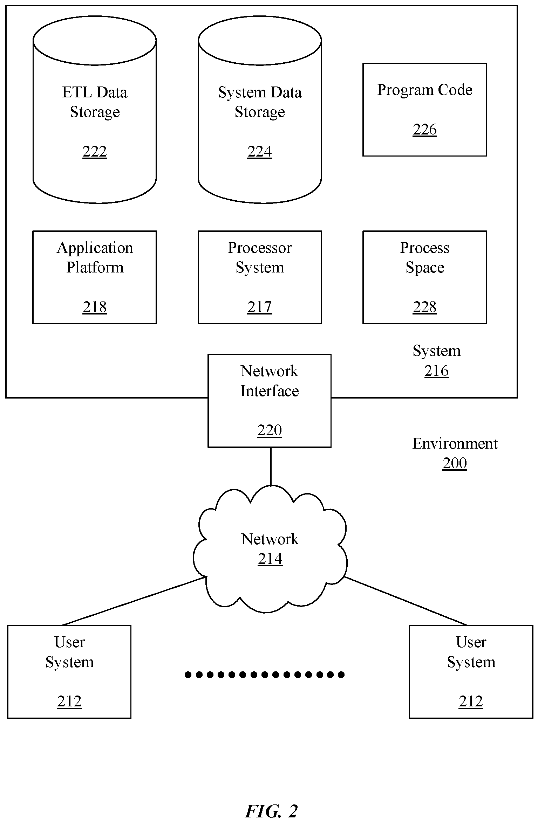

FIG. 2 illustrates a block diagram of an operating environment 200 wherein the no-code ETL system 216 may be implemented, which can be an embodiment of system 100 as previously described in FIG. 1. The operating environment 200 may include various components, each contributing to the effective functioning of the no-code ETL system. It is important to note that in other embodiments, the operating environment 200 may not have all of the components listed and/or may have other elements instead of, or in addition to, those listed here. In this disclosure, a user of the system may be synonymously referred to as a customer, client, or operator.

The operating environment 200 is one in which the no-code ETL system 216 exists and operates effectively. User systems 212 may be any machine or system used by a user to interact with the no-code ETL system 216. For example, user systems 212 may include handheld computing devices, mobile phones, laptops, workstations, or networks of computing devices. As illustrated in FIG. 2 (and in FIG. 1), user systems 212 interact via the network 214 with the no-code ETL system 216, which can include several components configured for performing aspects of the no-code ETL processes.

The no-code ETL system 216, encompassing an integrated data processing and transformation platform particularly adapted for performing such processes automated enabling complex operations to be performed by users with limited knowledge of the technical complexities of the system. Instead, users can leverage the system for various data operations such as data extraction, transformation, and loading. The application platform 218 provides a framework that enables the applications of system 216 to run, including hardware and software resources like the operating system. The no-code ETL system 216 may include application platform 218 which facilitates the creation, management, and execution of various applications developed either by the provider of the system, the users, or third-party developers.

System 200 can include several processes for data manipulation and transformation. For example, it can identify and extract data from various sources, transform this data based on user-configured rules and processes, and load the transformed data to specified destinations. These functionalities are made possible by various components of the system, including no-code ETL data storage 222, system data storage 224, process space 228, and processor system 217.

The network 214 is any network or combination of networks of devices that communicate with one another. It may be a LAN, WAN, telephone network, wireless network, or other appropriate configurations. While the most common type of network in current use is a TCP/IP network, such as the Internet, it should be understood that the network 214 is not limited to this configuration and may include other network types.

User systems 212 might communicate with system 216 using TCP/IP and at a higher network level, might use other common Internet protocols such as HTTP, FTP, or WAP. In some implementations, user systems 212 might include a "browser" for sending and receiving messages to and from system 216 over network 214. The interface between system 216 and network 214 might include load-sharing functionality, such as round-robin request distributors, to balance loads and distribute incoming requests evenly over a plurality of servers.

In one embodiment, system 216, shown in FIG. 2, implements a no-code ETL platform. For example, system 216 may include application servers configured to implement and execute no-code ETL software applications, as well as provide related data, code, forms, webpages, and other information to and from the user systems 212, and store to, and retrieve from, a database system related data and objects.

Several elements in the system shown in FIG. 2 include conventional, well-known elements that are explained only briefly here. For instance, each of the user systems 212 could include a personal computer, laptop, PDA, cell phone, or any WAP-enabled device capable of interfacing directly or indirectly to the Internet or other network connections. Each user system 212 typically runs a browser, allowing a user to access, process, and view information and applications available from system 216 over network 214.

According to one embodiment, each of the user systems 212 and all of its components are operator configurable using applications such as a browser. Similarly, system 216 and all of its components might be operator configurable using applications including computer code executed by a processor, such as processor system 217. The program code 228 can include instructions that may be used to program a computer to perform any of the processes of the embodiments described herein.

One arrangement for elements of system 216 is shown in FIG. 2, including network interface 220, application platform 218, no-code ETL data storage 222 for storing configuration and transformation data, system data storage 224 for storing operational data, program code 228 for implementing various functions of system 216, and process space 228 for executing service processes and system-specific processes. Process space 228 might be used for running applications and hosting services as part of the no-code ETL platform. In some embodiments, process space 228 can include a multi-threaded processing environment wherein different data transformation tasks can be executed in parallel, enhancing the overall efficiency of the system.

The no-code ETL data storage 222 is a critical component for the functioning of the system 216. It stores the configurations, rules, and templates used in the data transformation processes. This storage is configured to be highly flexible and scalable, accommodating the evolving needs of various data processing tasks. It enables users to store and retrieve transformation configurations easily and efficiently, thus facilitating the rapid deployment of data processing tasks.

System data storage 224 provides a repository for the operational data of system 216. This can include logs, user information, system status reports, and other data essential for the smooth operation and monitoring of the system. The storage is built to handle large volumes of data and is optimized for quick access and data retrieval, ensuring that system performance is maintained at optimal levels.

Program code 228 comprises the core software logic that drives the functionalities of system 216. It can include the algorithms and processing logic for extracting data from various sources, applying transformations as per user configurations, and loading the processed data to the desired destinations. This code is provided to facilitate flexibility and customization, enabling users to define their data processing logic without the need for extensive programming knowledge.

Application platform 218 is the backbone of system 216, providing the necessary hardware and software infrastructure for the execution of program code 228 and the storage and retrieval of data from no-code ETL data storage 222 and system data storage 224. This platform is configured to be robust and scalable, capable of supporting the processing of large volumes of data while maintaining high performance and reliability.

Processor system 217 is responsible for executing the instructions of program code 228. It comprises one or more processor units that are capable of handling the intensive computational tasks involved in data extraction, transformation, and loading. The processor system is chosen and optimized to handle the specific requirements of the no-code ETL processes, ensuring that data operations are executed swiftly and efficiently.

Process space 228 is where the actual execution of the data processing tasks takes place. It provides an isolated and secure environment for running the various processes and applications that form part of system 216. This space is configured to maximize processing efficiency and ensure the integrity and security of the data being processed.

Several elements in the system shown in FIG. 2 include conventional, well-known elements that are explained only briefly here. For example, each of the user systems 212 could include a desktop personal computer, workstation, laptop, PDA, cell phone, or any wireless access protocol (WAP) enabled device or any other computing device capable of interfacing directly or indirectly to the Internet or other network connection. Each of the user systems 212 typically runs an HTTP client, e.g., a browsing program, such as Microsoft's Edge browser, Google's Chrome browser, Opera's browser, or a WAP-enabled browser in the case of a cell phone, PDA or other wireless device, or the like, allowing a customer of the user systems 212 to access, process and view information, pages and applications available to it from the system 216 over the network 214. Each of the user systems 212 also typically can include one or more user interface devices, such as a keyboard, a mouse, trackball, touch pad, touch screen, pen or the like, for interacting with a graphical user interface (GUI) provided by the browser on a display (e.g., a monitor screen, LCD display, etc.) in conjunction with pages, forms, applications and other information provided by the system 216 or other systems or servers. For example, the user interface device may be used to access data and applications hosted by the system 216, and to perform searches on stored data, and otherwise allow a user to interact with various GUI pages that may be presented to a user. As discussed above, embodiments are suitable for use with the Internet, which refers to a specific global internetwork of networks. However, it should be understood that other networks may be used instead of the Internet, such as an intranet, an extranet, a virtual private network (VPN), a non-TCP/IP based network, any LAN or WAN or the like.

According to one embodiment, each of the user systems 212 and all of its components are operator configurable using applications, such as a browser, including computer code run using a central processing unit such as an Intel Pentium.RTM. processor or the like. Similarly, the system and all of their components might be operator configurable using application(s) including computer code to run using a central processing unit such as the processor system 217, which may include an Intel Pentium.RTM. processor or the like, and/or multiple processor units. A computer program product embodiment can include a machine-readable storage medium (media) having instructions stored thereon/in which may be used to program a computer to perform any of the processes of the embodiments described herein. Computer code for operating and configuring the system 216 to intercommunicate and to process webpages, applications and other data and media content as described herein are, for example, downloaded and stored on a hard disk, but the entire program code, or portions thereof, may also be stored in any other volatile or non-volatile memory medium or device as is well known, such as a ROM or RAM, or provided on any media capable of storing program code, such as any type of rotating media including floppy disks, optical discs, digital versatile disk (DVD), compact disk (CD), micro-drive, and magneto-optical disks, and magnetic or optical cards, Nano-systems (including molecular memory ICs), or any type of media or device suitable for storing instructions and/or data. Additionally, the entire program code, or portions thereof, may be transmitted and downloaded from a software source over a transmission medium, e.g., over the Internet, or from another server, as is well known, or transmitted over any other conventional network connection as is well known (e.g., extranet, VPN, LAN, etc.) using any communication medium and protocols (e.g., TCP/IP, HTTP, HTTPS, Ethernet, etc.) as are well known. It will also be appreciated that computer code for implementing embodiments may be implemented in any programming language that may be executed on a client system and/or server or server system such as, for example, C, C++, HTML, any other markup language, Java.TM., JavaScript, ActiveX, any other scripting language, such as VBScript, and many other programming languages as are well known may be used. (Java. TM. is a trademark of Sun Microsystems, Inc.).

Thereby, operating environment 200 is provided for the no-code ETL system 100. It enables the automated processing, transformation, and sharing of big data for various business applications. The operating environment is configured to be flexible, scalable, and user-friendly, catering to the diverse needs of users engaging in complex data operations.

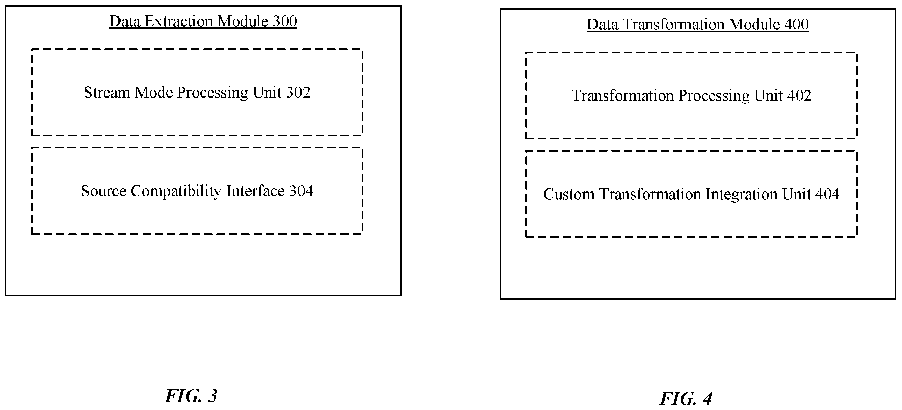

FIG. 3 illustrates the Data Extraction Module 300, which can be an embodiment of the Data Extraction Module 102 within the no-code ETL system 100. This module is specifically configured to efficiently extract and process data from a variety of sources. Referring to FIG. 3, a Data Extraction system 300 is provided to handle the initial phase of data processing. In one non-limiting example, the Data Extraction system 300 for streamlining data collection can include a Stream Mode Processing Unit 302 and a Source Compatibility Interface 304.

Stream Mode Processing Unit 302 can include sophisticated algorithms and techniques for reading and processing data in a stream mode. This functionality allows for the handling of large data files, such as extensive Excel files, by processing data in manageable chunks rather than loading the entire file into memory. This approach significantly enhances the efficiency and performance of the data extraction process, particularly when dealing with voluminous datasets.

The stream mode data processing capability of Data Extraction Module 300, as part of the no-code ETL system 100, provides a technical approach that addresses the challenge of handling large data files effectively. Stream Mode Processing Unit 302 can be engineered to process data files to efficiently perform batch processing. In some embodiments, Stream Mode Processing Unit 302 can be configured to perform real-time data reading and processing. In some embodiments, Stream Mode Processing Unit 302 can be configured read and process large data files by breaking them down into smaller, manageable chunks or batches. Thereby, Data Extraction Module 300 can handle data a controlled and efficient manner suitable for processing of large files.

A batch can be processed sequentially, ensuring that the system's memory usage remains within manageable limits. This method significantly reduces the risk of memory overload that often accompanies the processing of large files. By partitioning data, the module can handle each segment individually, applying necessary extraction processes before moving to the next. This batching approach also allows the system to pause, resume, or restart the processing of data files as needed, adding a layer of flexibility and control.

Stream Mode Processing Unit 302 can employ advanced algorithms that efficiently parse and process each batch. These algorithms are configured to optimize the reading, extraction, and initial processing of data, ensuring that each batch is handled swiftly and accurately. Thereby, data-intensive applications can be performed with optimization of time and resources. Moreover, Data Extraction Module 300 can adjust the size of each batch based on the overall file size and the system's current load. This scalability ensures that the module can adapt to varying file sizes and system capacities, maintaining optimal performance regardless of the data volume.

Stream Mode Processing Unit 302 enables effective error handling and data integrity checks. Since the system processes data in continuous batches, validation and error-checking routines can be performed on each batch independently. This granularity in processing data identifies and addresses inconsistencies or errors in specific batches, without impacting the entire file. Thereby, Stream Mode Processing Unit 302 processes data sequentially, handling one portion of the data at a time such that data is processed as it is read, in a controlled, batch manner.

Thus, Data Extraction Module 300 can use a stream mode process to manage large data files. This method provides a balance between efficiency and control, enabling the system to handle extensive data files with reduced memory strain and enhanced processing speed. The module's algorithms are tailored to optimize batch processing, ensuring scalability, accurate data handling, and robust error management. This approach, while distinct from real-time streaming, offers significant advantages in terms of resource management and operational flexibility, particularly in scenarios involving large-scale data extraction.

Source Compatibility Interface 304 is configured to enable the Data Extraction Module 300 to interface with various data sources. This can include cloud storage platforms, CRM systems, external APIs, and direct user uploads. The interface is equipped with a range of connectors and adapters, making it adaptable to different data environments and formats. This adaptability ensures that the module can extract data effectively regardless of its source or format, be it Excel, CSV, JSON, or other common data formats. Data Extraction Module 300 exhibits a technical capability to interface with a broad spectrum of data sources. This versatility is achieved through the integration of multiple data connectors and adapters. These components are engineered to establish connections with CRM systems, tapping into their databases to extract relevant data efficiently. Additionally, the module is equipped with interfaces to communicate with various external APIs, enabling it to access and retrieve data from a range of external systems and platforms. The module's adaptability extends to handling different file formats, including but not limited to Excel, CSV, and JSON. This functionality is underpinned by sophisticated parsing algorithms that can interpret and process the structural nuances of these diverse formats, ensuring accurate data extraction and minimizing format-related errors.

Additionally, Data Extraction Module 300 incorporates data integrity mechanisms to ensure the accuracy and consistency of the extracted data. These mechanisms involve validation processes that check the structure and content of the data against predefined criteria, identifying any anomalies or inconsistencies. This feature is vital in maintaining the quality and reliability of the data as it moves through the subsequent stages of processing in the ETL system.

Advanced data integrity assurance mechanisms systematically evaluate data against predefined criteria, identifying discrepancies such as missing values, format inconsistencies, and data corruption to ensure accuracy of each data batch and to maintain the consistency of the overall dataset. Thereby, Data Extraction Module 300 is configured to efficiently extract data from various sources while ensuring its integrity, setting a solid foundation for the effective operation of System 100 in various data processing scenarios.

FIG. 4 depicts an embodiment of Data Transformation Module 400, which can be a specific embodiment of Data Transformation Module 104 in the no-code ETL system 100. This module facilitates advanced data transformations required in various business applications. Referring to FIG. 4, the Data Transformation system 400 can include a Transformation Processing Unit 402 and a Custom Transformation Integration Unit 404, configured to address complex data operations.

Transformation Processing Unit 402 employs algorithms to execute a range of data transformations. These transformations cover mathematical operations, currency conversion, and advanced data structuring. The unit uses a programming language like JQ, allowing for intricate and flexible data manipulation. This capability enables users to tailor data transformations to specific requirements.

Custom Transformation Integration Unit 404 enables users to add their custom transformations to the Data Transformation Module 400. This unit integrates with the CloudBlue Connect Transformation Extension module API, providing a platform for incorporating user-defined transformations. Users write custom code following the system's guidelines, which the system then integrates, expanding the module's functionality.

In some embodiments, Data Transformation Module 400 can be operably connected, such as via API, to an automation platform (e.g., CLOUDBLUE CONNECT) to enable the integration of complex distribution and supply chain applications. This integration facilitates interaction with various entities in the distribution chain, including vendors, distributors, and resellers. The module can integrate an API gateway to enable users to create custom transformations tailored for specific supply chain and distribution scenarios. This can include automating interactions between different entities or integrating various distribution chain data formats into a unified processing system.

Integration enables inclusion of transformation logic tailored to specific user needs. Users can develop transformations, which may include unique business logic or data manipulation routines not available in the standard transformation set. The system thereby incorporates user-defined transformations into its no-code operational framework. This capability is underpinned by a dynamic linking mechanism, allowing the system to recognize and execute these custom transformations as if they were native components of the module. It enhances the system's flexibility and makes it adaptable to niche and evolving data processing requirements.

Data Transformation Module 400 also features a user-friendly configuration interface. The interface streamlines the setup and application of transformations, making the process accessible even to users with limited programming expertise. It enables straightforward selection, customization, and testing of transformations, ensuring accurate data processing as per user specifications. In accordance with the system's no-code principle of operation, the interface presents users with a visual representation of data flows and transformation processes, enabling them to understand and configure transformations without needing to write or understand complex code. The interface also can include features like drag-and-drop capabilities, pre-built transformation templates, and interactive guides, which assist in simplifying the configuration process. This user-centric design approach empowers a broader spectrum of users, including those with minimal technical background, to leverage advanced data processing capabilities, thereby fostering a more inclusive use of the system across various organizational roles. Thereby, Data Transformation Module 400 is configured to handle diverse data transformations, from standard to custom processes, significantly contributing to the versatility of System 100 in various data transformation contexts.

It should be understood that the operations shown in the exemplary methods are not exhaustive and that other operations can be performed as well before, after, or between any of the illustrated operations. In some embodiments of the present disclosure, the operations can be performed in a different order and/or vary.

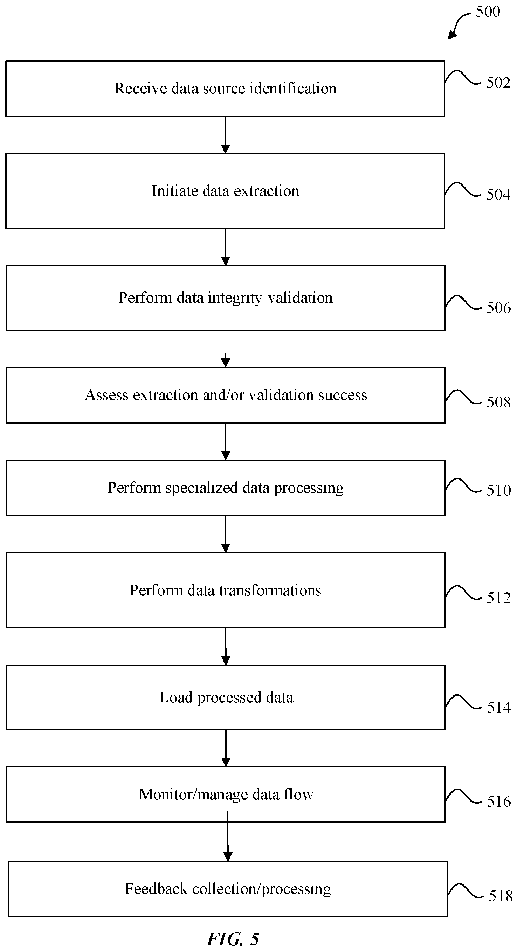

FIG. 5 is a flow diagram of a method 500, an embodiment for performing a no-code ETL process within system 100. This method provides an efficient approach to data handling and processing, encompassing data extraction, transformation, and loading. Method 500 is configured to efficiently manage data workflows, ensuring accuracy, scalability, and adaptability to various data environments. Based on the disclosure herein, operations in method 100 can be performed in a different order and/or vary.

At operation 502, a computing device can perform identification of data sources. This step involves determining the origin of the data, which could be CRM systems, external APIs, cloud storage, or direct uploads. The process can include evaluating the data formats and structures expected from these sources, ensuring that the subsequent extraction process is tailored to handle the data effectively.

At operation 504, computing device can initiate the data extraction process. This step involves the Data Extraction Module 300 employing its stream mode data processing technique. The module processes the data in manageable batches, reducing memory load and enhancing processing efficiency. This step is critical for handling large data files, such as extensive Excel documents, where loading the entire file into memory is not feasible.

At operation 506, the computing device can perform data integrity checks. This validation process can include scrutinizing the data for structural accuracy, content consistency, and identifying any anomalies or discrepancies. The system employs a series of algorithms configured to detect and address issues such as missing values, format inconsistencies, and data corruption. This step is pivotal in ensuring that the extracted data is reliable and suitable for further processing.

At operation 508, the computing device can determine if extraction and validation was successful. If successful, the system transitions to the data transformation phase. In this step, users interact with the user-friendly configuration interface of the Data Transformation Module 400. Users can select from a range of pre-built transformation templates or configure custom transformations. This process can include defining the transformation logic, such as mathematical operations, currency conversions, and data structuring, tailored to the specific needs of the data processing task.

At operation 510, the computing device can perform optional specialized data manipulations. If required by a user, the system offers the capability to integrate custom transformations. Users can write and integrate their transformation code via an API (e.g., the CLOUDBLUE CONNECT API). Operation 510 can include applying unique business logic or data manipulation routines, enhancing the adaptability of the system to specific user requirements.

At operation 512, with configurations set, the computing device can execute the data transformations. Operation 512 can include applying defined transformation logic to the extracted data. The Transformation Processing Unit 402 of Module 400 can be configured to perform operation 512, such that each data batch is processed according to the configured rules and conditions. Operation 512 can include converting the raw, extracted data into a format that is meaningful and useful for the end-users.

At operation 514, the computing device can perform loading of processed data into the designated destination systems. This could include databases, data warehouses, or other storage systems. The loading process is configured to be efficient, ensuring that the transformed data is integrated accurately and completely into the target systems.

At operation 516, the computing device can continuously monitor and manage the data flow. This can include tracking the progress of data extraction, transformation, and loading, as well as identifying and addressing any issues that may arise during the process. The system provides tools and interfaces for users to oversee the ETL workflow, offering insights into each step and the ability to intervene if necessary.

At operation 518, the computing device can collect feedback and iterate the process. Based on the performance of the ETL workflow and user feedback, the system can adjust and refine its processes. This may involve tweaking transformation configurations, optimizing extraction methods, or modifying data loading techniques. This iterative approach ensures continuous improvement of the ETL process, adapting to changing data requirements and user needs.

Thereby, method 500 provides a no-code ETL process to be performed by a computing device, such as system 100. The no-code ETL process manages complex data workflows, enabling diverse data processing requirements in various business environments.

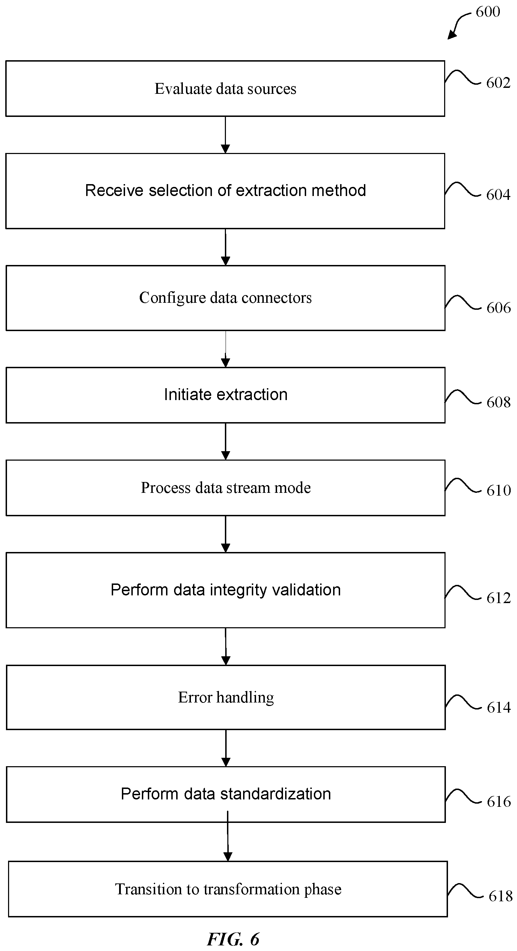

FIG. 6 illustrates method 600, for performing a data extraction process within the no-code ETL system 100. Method 600 ensures a reliable extraction stage of the ETL process.

At operation 602, a computing device performs identification and evaluation of data sources. This step involves a detailed analysis of where the data originates, including CRM systems, external APIs, cloud storage platforms, or direct uploads. It assesses the formats, structures, and specific characteristics of the data from these sources, setting the stage for optimized extraction.

At operation 604, depending on the nature of the data source, the computing device selects the most suitable extraction method. This could involve direct API calls for cloud-based sources, SQL queries for database systems, or parsing algorithms for file-based sources. The selection is based on the efficiency and compatibility of the method with the data source.

At operation 606, the computing device configures the necessary data connectors and adapters. This step ensures integration with the data source, enabling the system to access and retrieve data effectively. The connectors and adapters are tailored to handle specific data protocols and formats inherent in the source.

At operation 608, the computing device initiates the extraction process, where data is pulled from the source based on the configured method and connectors. This process is executed while maintaining data integrity, ensuring that the data is accurately captured from the source without any loss or corruption.

For large data files especially, at operation 610, the computing device performs stream mode data processing approach. This involves reading and processing the data in manageable chunks, effectively reducing the memory load and enhancing processing speed. The system dynamically adjusts the size of these chunks based on file size and system capacity.

At operation 612, the computing device performs a series of data integrity checks and validation procedures. This can include verifying data formats, ensuring structural accuracy, and detecting any anomalies or inconsistencies. These checks are critical for ensuring the quality and reliability of the extracted data.

At operation 614, the computing device checks if errors or issues are encountered during extraction and, if so, the computing device invokes one or more mechanisms to handle and resolve these. This may involve retrying the extraction process, adjusting the extraction parameters, or flagging the issues for user intervention. Thereby, operation 614 performs validation and correction to maintain continuity and efficiency of the extraction process.

At operation 616, the computing device formats and standardizes the extracted data. This step ensures that the data conforms to a consistent structure and format, facilitating integration with subsequent transformation processes in the ETL workflow.

Upon successful extraction and standardization, at operation 618, the computing device transitions to the data transformation phase. The extracted data is now ready for further manipulation and processing as defined in the subsequent stages of the ETL system. Thereby, method 600 provides an efficient approach to data extraction within the no-code ETL system.

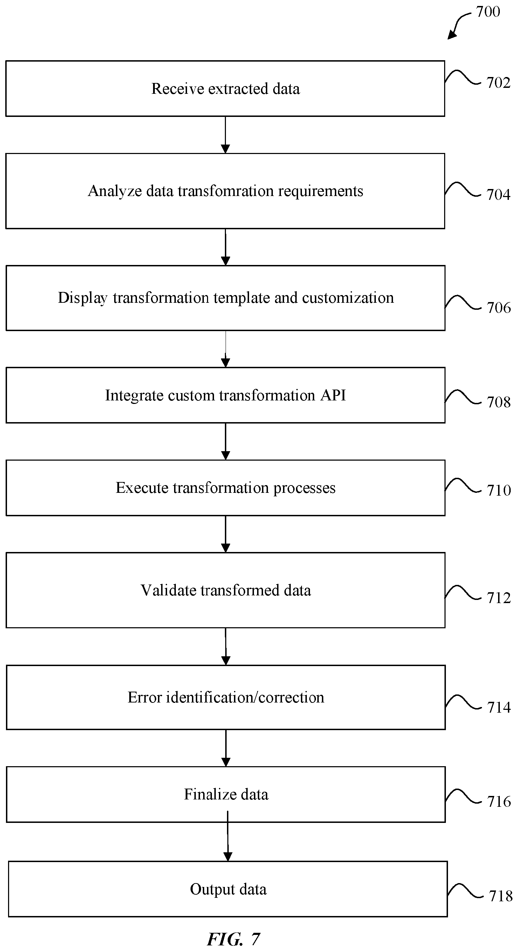

FIG. 7 illustrates method 700 for performing a data transformation process within the no-code ETL system 100. Method 700 provides an efficient approach for transforming extracted data, ensuring its relevancy, accuracy, and suitability for the intended use.

At operation 702, a computing device commences with the receipt of data from the Data Extraction Module. This data arrives in a raw format, directly from various data sources, and requires transformation to achieve the desired structure and content.

At operation 704, the computing device analyzes the structure of the received data and identifies the transformation requirements. This step involves understanding the end-use of the data, which could range from analytical processing to report generation, and defining the transformation logic needed to meet these objectives.

At operation 706, the computing device displays pre-built transformation templates suited for common data scenarios. In this step, users select the appropriate templates that align with their data transformation goals. These templates simplify the transformation process, especially for users without extensive technical expertise.

At operation 708, the computing device optionally enables scenarios requiring specialized data manipulation, allowing users to configure custom transformations. This involves writing transformation logic or scripts, possibly using a programming language like JQ, to define specific data manipulation routines.

At operation 710, the computing device integrates any optional custom transformations into the transformation process using an API. This step allows the system to process these user-defined transformations alongside standard transformations, enhancing the flexibility and capability of the data transformation module.

At operation 712, the computing device executes the transformation process. This step involves applying the selected or custom transformation logic to the raw data, converting it into the format required for its intended use.

At operation 714, the computing device validates the transformed data to ensure it meets the predefined criteria. This validation checks for data integrity, accuracy, and consistency with the transformation objectives.

At operation 716, the computing device identifies errors or inconsistencies in the transformed data and employs necessary corrective measures. These may include reapplying transformations with adjusted parameters or flagging issues for manual review and intervention.

At operation 718, the computing device formats the validated, transformed data into a final structure, making it ready for loading into target systems or for direct use. This step ensures that the data is not only accurate and relevant but also presented in a manner that is accessible and understandable for the end-users.

At operation 720, upon successful transformation and formatting, the computing device outputs the data to be loaded into the designated destination systems, such as databases or data warehouses. This marks the completion of the data transformation process and the transition to the final phase of the ETL workflow. Thereby, method 700 enables a data transformation process within the no-code ETL system. Data involved in the process undergoes necessary transformations while the process maintains integrity and the specific requirements of the end-use.

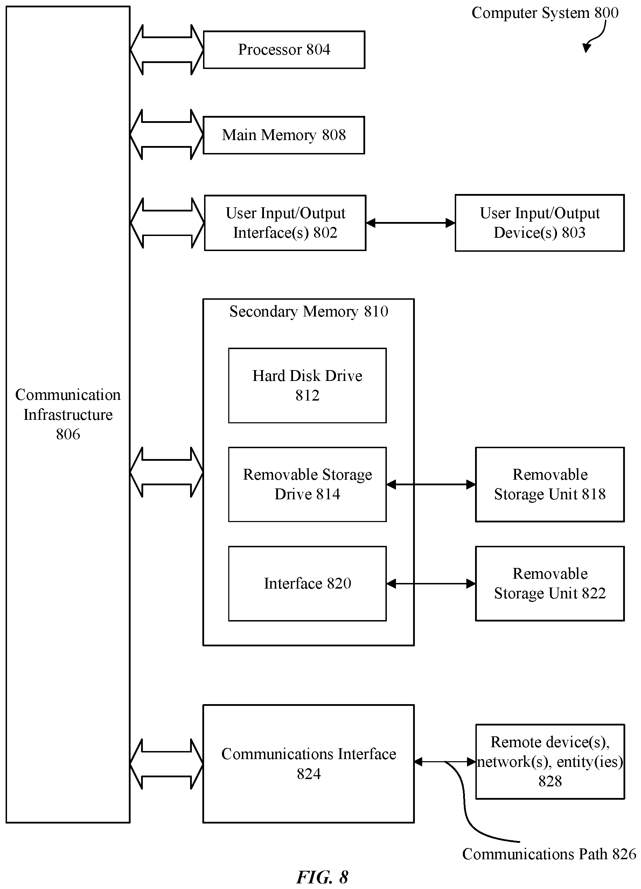

FIG. 8 is a block diagram of example components of device 800. One or more computer systems 800 may be used, for example, to implement any of the embodiments discussed herein, as well as combinations and sub-combinations thereof. Computer system 800 may include one or more processors (also called central processing units, or CPUs), such as a processor 804. Processor 804 may be connected to a communication infrastructure or bus 806.

Computer system 800 may also include user input/output device(s) 803, such as monitors, keyboards, pointing devices, etc., which may communicate with communication infrastructure 806 through user input/output interface(s) 802.

One or more processors 804 may be a graphics processing unit (GPU). In an embodiment, a GPU may be a processor that is a specialized electronic circuit designed to process mathematically intensive applications. The GPU may have a parallel structure that is efficient for parallel processing of large blocks of data, such as mathematically intensive data common to computer graphics applications, images, videos, etc.

Computer system 800 may also include a main or primary memory 808, such as random access memory (RAM). Main memory 808 may include one or more levels of cache. Main memory 808 may have stored therein control logic (i.e., computer software) and/or data.

Computer system 800 may also include one or more secondary storage devices or memory 810. Secondary memory 810 may include, for example, a hard disk drive 812 and/or a removable storage device or drive 814.

Removable storage drive 814 may interact with a removable storage unit 818. Removable storage unit 818 may include a computer-usable or readable storage device having stored thereon computer software (control logic) and/or data. Removable storage unit 818 may be program cartridge and cartridge interface (such as that found in video game devices), a removable memory chip (such as an EPROM or PROM) and associated socket, a memory stick and USB port, a memory card and associated memory card slot, and/or any other removable storage unit and associated interface. Removable storage drive 814 may read from and/or write to removable storage unit 818.

Secondary memory 810 may include other means, devices, components, instrumentalities or other approaches for allowing computer programs and/or other instructions and/or data to be accessed by computer system 800. Such means, devices, components, instrumentalities or other approaches may include, for example, a removable storage unit 822 and an interface 820. Examples of the removable storage unit 822 and the interface 820 may include a program cartridge and cartridge interface (such as that found in video game devices), a removable memory chip (such as an EPROM or PROM) and associated socket, a memory stick and USB port, a memory card and associated memory card slot, and/or any other removable storage unit and associated interface.

Computer system 800 may further include a communication or network interface 824. Communication interface 824 may enable computer system 800 to communicate and interact with any combination of external devices, external networks, external entities, etc. (individually and collectively referenced by reference number 828). For example, communication interface 824 may allow computer system 800 to communicate with external or remote devices 828 over communications path 826, which may be wired and/or wireless (or a combination thereof), and which may include any combination of LANs, WANs, the Internet, etc. Control logic and/or data may be transmitted to and from computer system 800 via communication path 826.

Computer system 800 may also be any of a personal digital assistant (PDA), desktop workstation, laptop or notebook computer, netbook, tablet, smartphone, smartwatch or other wearables, appliance, part of the Internet-of-Things, and/or embedded system, to name a few non-limiting examples, or any combination thereof.

Computer system 800 may be a client or server, accessing or hosting any applications and/or data through any delivery paradigm, including but not limited to remote or distributed cloud computing solutions; local or on-premises software ("on-premise" cloud-based solutions); "as a service" models (e.g., content as a service (CaaS), digital content as a service (DCaaS), software as a service (SaaS), managed software as a service (MSaaS), platform as a service (PaaS), desktop as a service (DaaS), framework as a service (FaaS), backend as a service (BaaS), mobile backend as a service (MBaaS), infrastructure as a service (IaaS), etc.); and/or a hybrid model including any combination of the foregoing examples or other services or delivery paradigms.

Any applicable data structures, file formats, and schemas in computer system 800 may be derived from standards including but not limited to JavaScript Object Notation (JSON), Extensible Markup Language (XML), Yet Another Markup Language (YAML), Extensible Hypertext Markup Language (XHTML), Wireless Markup Language (WML), MessagePack, XML User Interface Language (XUL), or any other functionally similar representations alone or in combination. Alternatively, proprietary data structures, formats or schemas may be used, either exclusively or in combination with known or open standards.

In some embodiments, a tangible, non-transitory apparatus or article of manufacture comprising a tangible, non-transitory computer useable or readable medium having control logic (software) stored thereon may also be referred to herein as a computer program product or program storage device. This can include, but is not limited to, computer system 800, main memory 808, secondary memory 810, and removable storage units 818 and 822, as well as tangible articles of manufacture embodying any combination of the foregoing. Such control logic, when executed by one or more data processing devices (such as computer system 800), may cause such data processing devices to operate as described herein.

It is to be appreciated that the Detailed Description section, and not the Summary and Abstract sections, is intended to be used to interpret the claims. The Summary and Abstract sections may set forth one or more but not all exemplary embodiments of the present invention as contemplated by the inventor(s), and thus, are not intended to limit the present invention and the appended claims in any way.

The present invention has been described above with the aid of functional building blocks illustrating the implementation of specified functions and relationships thereof. The boundaries of these functional building blocks have been arbitrarily defined herein for the convenience of the description. Alternate boundaries can be defined so long as the specified functions and relationships thereof are appropriately performed.

The foregoing description of the specific embodiments will so fully reveal the general nature of the invention that others can, by applying knowledge within the skill of the art, readily modify and/or adapt for various applications such specific embodiments, without undue experimentation, without departing from the general concept of the present invention. Therefore, such adaptations and modifications are intended to be within the meaning and range of equivalents of the disclosed embodiments, based on the teaching and guidance presented herein. It is to be understood that the phraseology or terminology herein is for the purpose of description and not of limitation, such that the terminology or phraseology of the present specification is to be interpreted by the skilled artisan in light of the teachings and guidance.

The breadth and scope of the present invention should not be limited by any of the above-described exemplary embodiments, but should be defined only in accordance with the following claims and their equivalents.

## Claims

1. A data processing system for automating an Extract, Transform, Load (ETL) process, comprising:
a server, coupled to a processor, and configured to execute instructions that:
extract data from multiple sources, the sources selected from one or more of cloud storage, external APIs, and direct file uploads, wherein the extraction is performed a stream mode processing unit configured to segment data in two or more manageable chunks;
validate the structural integrity and content accuracy of the extracted data using data integrity algorithms, the validation being defined by, the data integrity algorithms based on at least one of: format consistency checks, anomaly detection, and data corruption identification;
transform the extracted data via a transformation processing unit, the transformation comprising application of pre-defined and custom transformation templates, the transformation processing unit further configured to:
integrate user-defined transformation logic through an API, the integration allowing customization of data transformations;
format the transformed data for loading into destination systems.

2. The system of claim 1, wherein the stream mode processing unit dynamically adjusts the size of data chunks based on the size of the data file and system capacity.

3. The system of claim 1, wherein the data integrity algorithms comprise error correction mechanisms, configured to address identified data inconsistencies during the extraction process.

4. The system of claim 1, wherein instructions configure the processor for performing a no-code realization of the automating, the no-code realization comprising instructions wherein:
the transformation processing unit utilizes a built-in programming language for defining custom transformation logic, the custom transformation logic enabling user to define custom extensions in a low-code environment, allowing for the specification of rules for custom operations, and
the stream mode processing unit enables users to manage data chunk sizes and processing parameters without programming expertise.

5. The system of claim 1, further comprising a no-code user interface (UI) configured to allow users to select and configure transformations from a set of pre-built templates without programming expertise.

6. The system of claim 1, wherein the API for integrating user-defined transformation logic is compatible with a range of external programming environments.

7. The system of claim 1, wherein the server comprises a data loading module configured to load the transformed data into two or more different destination systems, the destination systems selected from databases and data warehouses.

8. The system of claim 1, wherein the server is further configured to execute instructions for monitoring data flow through an entirety of the ETL process, comprising tracking progress and performing real-time error correction.

9. The system of claim 1, further comprising a logging module configured to record one or more data change logs for storing changes to data, including timestamps, a nature of the change, and a user identification associated with manual changes, and wherein the logging module enables comprehensive auditability and/or traceability of each change.

10. The system of claim 9, wherein the server comprises a permissions management module configured to adjust access to data change logs and to ensure traceability control.

11. A computer-implemented method, comprising:
identifying data sources for extraction, the data sources selected from one or more of cloud storage, external APIs, and direct file uploads;
executing a data extraction process from the identified data sources using a server coupled to a processor;
performing data integrity checks on the extracted data using data integrity algorithms to ensure structural accuracy and content consistency;
configuring data transformations based on the validated data, comprising selecting from pre-built transformation templates and defining custom transformations;
integrating custom transformation logic into the data transformation process via an API;
applying the configured data transformations to the extracted data;
validating the transformed data to ensure compliance with predefined criteria;
formatting the validated, transformed data for loading into target systems.

12. The method of claim 11, wherein the data extraction process comprises stream mode processing, and wherein the stream mode processing comprises segmenting data in manageable chunks adjusted dynamically based on file size and/or system capacity.

13. The method of claim 11, wherein the data integrity checks comprise one or more error correction processes for addressing discrepancies identified during extraction.

14. The method of claim 11, wherein configuring data transformations comprises implementing a built-in programming language for custom transformation logic.

15. The method of claim 11, further comprising receiving via a user interface input about a selection and/or configuration of one or more intended transformations from pre-built templates.

16. The method of claim 11, wherein integrating custom transformation logic via an API comprises integrating custom transformation logic via the API from one or more external programming environments.

17. The method of claim 11, wherein the method comprises loading the transformed data into two or more different destination systems selected from databases and data warehouses.

18. The method of claim 11, wherein the method comprises monitoring data flow through an entirety of the ETL process, tracking progress, and performing real-time error correction.

19. A non-transitory tangible computer-readable device having instructions stored thereon that, when executed by a computing device, cause the computing device to perform operations comprising:
identifying data sources for extraction, the data sources selected from one or more of cloud storage, external APIs, and direct file uploads;
executing, by a computer, a data extraction process from the identified data sources;
performing data integrity checks on the extracted data using data integrity algorithms to ensure structural accuracy and content consistency;
configuring data transformations based on the validated data, comprising selecting from pre-built transformation templates and defining custom transformations;
integrating custom transformation logic into the data transformation process via an API;
applying the configured data transformations to the extracted data;
validating the transformed data to ensure compliance with predefined criteria;
formatting the validated, transformed data for loading into target systems.

20. The computer-readable device of claim 19, wherein performing the data extraction process comprises performing stream mode processing, wherein the configuring data transformation comprises utilizing a built-in programming language for defining custom transformation logic, the custom transformation logic enabling user to define custom extensions in a low-code environment, allowing for the specification of rules for custom operations, and wherein performing the stream mode processing comprises segmenting data in manageable chunks adjusted dynamically based on file size and/or system capacity.
